# EUROPEAN PATENT APPLICATION

(11) **EP 2 106 137 A1**
(43) Date of publication of application: **30.09.2009**
(21) Application number: 08305068.2
(22) Date of filing: 25.03.2008
(51) Int. Cl.: H04N 7/16

(54) **Method of recovering time for end user's events on a mobile terminal equipment**

(71) Applicant: GEMPLUS, 13420 Gémenos (FR)
(72) Inventor: Gregoire, Louis, 13260 Cassis (FR)

(57) **Abstract**

The invention is a method of dating events happening on mobile terminal equipment. Data related to a broadcasted service is broadcasted through a first stream comprising control messages, a second stream comprising actual service and third stream comprising service identifiers. Each stream is received by both said mobile terminal equipment and a recording system. A portable electronic device is connected to the mobile terminal equipment and said events are generated during a preset period. The method comprises the steps of:
- extracting a control message from the first stream,
- sending the extracted control message from said mobile terminal equipment to said portable electronic device,
- in the portable electronic device, generating an indicator as a function of data comprised in the control message, the generated indicator being unique for the preset period and for said broadcasted service,
- in the recording system, generating a series of packets comprising an indicator, a reference to an absolute date and a service identifier extracted from a message belonging to the third stream, each indicator of said packet being generated as the function of data extracted from a control message belonging to broadcasted first stream,
- seeking in the series of packets a packet having an indicator equivalent to whole or part of the indicator generated in the portable electronic device,
- if a packet is found, generating a set comprising the reference to an absolute date and the service identifier comprised in the found packet.

## Description

### (Field of the invention)

The present invention relates to methods of dating events on mobile terminal equipments. It relates particularly to methods of dating events in the purpose of broadcast audience monitoring and recovering time for end-user's events related to broadcasted services. In particular, the present invention is well suited for the mobile-TV domain.

### (Prior art)

Broadcasted services are used to transmit applicative data like audio or video data. In particular these broadcasted services may be received and exploited on mobile terminal equipments like telecom handsets or handheld TV receivers. There is a need to accurately date events generated on the telecom handset. These events may be technical events or user's events. Technical events are automatically generated by the system. For example it may be the receipt or the sending of a message related to a broadcasted service. User's events are generated by user's actions on the mobile terminal equipment. For example it may be the selection of a given service or the stop of the current service. Technical events and user's events may be also called local events. There is a need for having an accurate date stamping of these events. In particular, such a date stamping may be used for monitoring the broadcast audience.

The mobile terminal equipment may provide a date reference. But such a date reference is not reliable because the date may be modified by the user or may be automatically changed when the mobile terminal equipment is reinitialized with a system depending on another time zone. Moreover the messages of broadcasted services may contain a reference date. On the one hand availability of such a reference date is not guaranteed; on the other hand the intermediate treatments performed on the broadcasted messages induce variable latency time in the moment of message reception. Thus a problem is that there is no possibility to reliably date events generated on the telecom handset. In this specification, the word date means a couple date and time.

### (Summary of the Invention)

An object of the invention is to solve the above mentioned technical problem.

The object of the present invention is a method of dating events happening on a mobile terminal equipment. Data related to a broadcasted service is broadcasted through first, second and third streams. The first stream comprises control messages, the second stream comprises actual service and the third stream is built of messages comprising a service identifier corresponding to the broadcasted service. Each stream is received by both said mobile terminal equipment and a recording system. A portable electronic device is connected to the mobile terminal equipment. Said events are generated during a preset period. Said method comprises the following steps:
a) extracting a control message from the first stream,
b) sending the extracted control message from said mobile terminal equipment to said portable electronic device,
c) in said portable electronic device, generating an indicator as a function F1 of data comprised in the control message, said generated indicator being unique for the preset period and for said broadcasted service,
d) in said recording system, generating a series of packets comprising an indicator, a reference to an absolute date and a service identifier extracted from a message belonging to the third stream, each indicator of said packet being generated as the function F1 of data extracted from a control message belonging to broadcasted first stream,
e) seeking in the series of packets, a packet having an indicator equivalent to whole or part of the indicator generated in the portable electronic device,
f) if a packet is found, generating a set comprising the reference to an absolute date and the service identifier comprised in the found packet.

Said method may comprise the further steps:
g) in said portable electronic device, identifying a local event by means of data extracted from the control message,
h) associating said local event to the generated indicator.

Said local event may be identified by means of data stored in the portable electronic device.

Said method may comprise the further steps:
i) identifying a local event by means of data extracted from two consecutive control messages of the first stream,
j) associating said local event to the generated packet.

Several broadcasted services may be received by both the mobile terminal equipment and the recording system. The indicator generated in said portable electronic device may be unique for the predefined period whatever the broadcasted services.

The control message may be an encryption control message in a conditional access system. The control message may be a STKM according to the OMA BCast standard.

The indicator generated in the portable electronic device may comprise the traffic encryption key TEK and/or the service encryption key SEK and/or the service encryption key identifier SEKID and/or the Time Stamp TS and/or the KEMAC of the STKM.

Said portable electronic device may consecutively receive a second control message with the first control message. Receipt of the first and second control messages may be separated by a time unit number N. Said method may comprise the steps:
k) in said portable electronic device measuring said time unit number N,
l) associating said measured time unit number N to the generated indicator associated to the first control message.

Another object of the invention is a portable electronic device intended to be connected to a mobile terminal equipment. Said mobile terminal equipment is intended to receive streams of a broadcasted service, to extract a control message from a first stream and to send said control message to the portable electronic device. Said portable electronic device comprises a microprocessor, a communication interface, an operating system, a working memory and a non volatile memory. Said portable electronic device comprises first means for extracting data contained in the control message and second means for generating an indicator as a function F1 of said data extracted from the control message where said generated indicator is unique for a preset period and for a broadcasted service.

Several broadcasted services may be received by the mobile terminal equipment. The indicator generated in said portable electronic device may be unique for the predefined period whatever the broadcasted services.

Said portable electronic device may comprise third means for identifying a local event by means of data extracted from the control message and said second means may be able to generate the indicator as a function of said local event.

Said portable electronic device may consecutively receive a second control message with the first control message. Receipt of the first and second control messages may be separated by a time unit number. Said portable electronic device may comprise fourth means for measuring said time units number. Said second means may be able to generate the indicator associated to the first control message as a function of the measured time unit number.

Said portable electronic device may be a smart card.

Another object of the invention is a matching system intended to store an indicator generated in a portable electronic device and to store a series of packets generated by a recording system. Each of said packets comprises a reference to an absolute date and a service identifier. Said matching system comprises a microprocessor, a communication interface, an operating system, a working memory and a non volatile memory. Said matching system comprises first means for seeking in said series of packets, a packet having an indicator equivalent to whole or part of the indicator generated in the portable electronic device. Said matching system comprises second means for generating a set comprising the reference to an absolute date and the service identifier comprised in a packet belonging to said series of packets.

### (Brief description of the drawings)

Other characteristics and advantages of the present invention will emerge more clearly from a reading of the following description of a number of preferred embodiments of the invention with reference to the corresponding accompanying drawings in which:
- Figure 1 is an example of step sequence for dating events according to the invention;
- Figure 2 depicts schematically an example of architecture of a portable electronic device intended to generate and store indicators according to the invention;
- Figure 3 depicts schematically an example of architecture of a matching system intended to generate sets according to the invention; and
- Figure 4 depicts schematically an example of architecture of a broadcast framework comprising a recording system, a matching system and a portable electronic device according to the invention.

### (Detailed description of the preferred embodiments)

The invention may apply to any types of portable electronic devices. In this specification, the portable electronic device is a SIM smart card but it could be any other kind of portable electronic device intended to treat messages related to broadcasted services.

The invention may apply to any types of mobile terminal equipments. In this specification, the mobile terminal equipment is a telecom handset but it could be any other kind of mobile terminal equipment intended to receive and to use broadcasted services.

The invention may apply to any types of broadcasted services. In this specification, the broadcasted services comply with the OMA-BCast standard but broadcasted services could comply with any other relevant broadcast standards.

An advantage of the invention is to provide a method for reliably dating events independently of the used mobile terminal equipment.

An additional advantage of the invention is to provide a method for reliably dating events without any upgrade or modification required for the used mobile terminal equipment.

Another advantage of the invention is to require a limited bandwidth between the portable electronic devices and the mobile terminal equipment.

Another advantage of the invention is to be transparent for the user of the mobile terminal equipment. The invention does not require any additional specific action for the user.

Another advantage of the invention is to allow dating of events related to several services broadcasted in parallel.

Another advantage of the invention is that the format and content of the control messages does not need to be known when using full control message content as indicator.

Another advantage of the invention is that events may be reliably dated even if the mobile terminal equipment changed from a communication cell depending from a first time zone to another communication cell depending from another time zone. This case may occur when a user crosses the border separating two states or two countries.

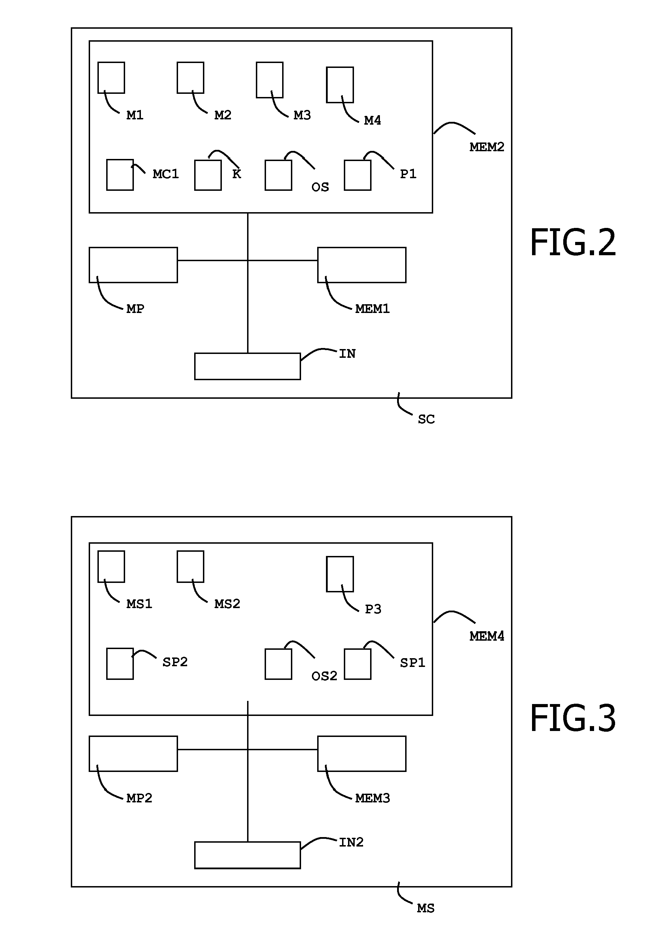

**Figure 2** shows the architecture of a portable electronic device SC of SIM type according to a preferred embodiment of the invention.

The portable electronic device SC comprises a working memory MEM1 of RAM type, a non volatile memory MEM2, a microprocessor MP and a communication interface IN.

The portable electronic device SC is intended to receive a control message CM1 of STKM type from the telecom handset and through the communication interface IN.

The portable electronic device SC comprises an operating system OS. The non volatile memory MEM2 may be NAND flash or EEPROM memory. The non volatile memory MEM2 is intended to store a key K and a control message MC1 received from the connected telecom handset.

The portable electronic device SC comprises four means. The first means M1 is able to extract data contained in the received control message MC1. The second means M2 is able to generate an indicator P1 as a function F1 of the data extracted from the control message MC1. The third means M3 is able to identify a local event LE by means of data extracted from the control message MC1. The fourth means M4 is able to measure the time units number DEL between receipts of two consecutive control messages.

The second means M2 is able to generate the indicator P1 as a function of the measured time units number DEL and of the local event LE.

**Figure 3** shows the architecture of a matching system MS according to a preferred embodiment of the invention.

The matching system MS comprises a working memory MEM3 of RAM type, a non volatile memory MEM4, a microprocessor MP2 and a communication interface IN2.

The matching system MS is intended to get a series SP2 of packets P2 generated by a recording system RS. The matching system MS is intended to get a series SP1 of indicators P1 generated by the portable electronic device SC.

The matching system MS comprises an operating system OS2. The non volatile memory MEM4 may be NAND flash, EEPROM memory, a hard disk or any non volatile storing means. The non volatile memory MEM4 is intended to store the received series SP2 of packets P2 and the received series SP1 of indicators P1.

The matching system MS comprises two means. The first means MS1 is able to seek in the series SP2 a packet having an indicator equivalent to whole or part of an indicator P1.

The second means MS2 is able to generate a set P3 comprising the reference to an absolute date RDA and the service identifier SID comprised in a packet belonging to the series SP2.

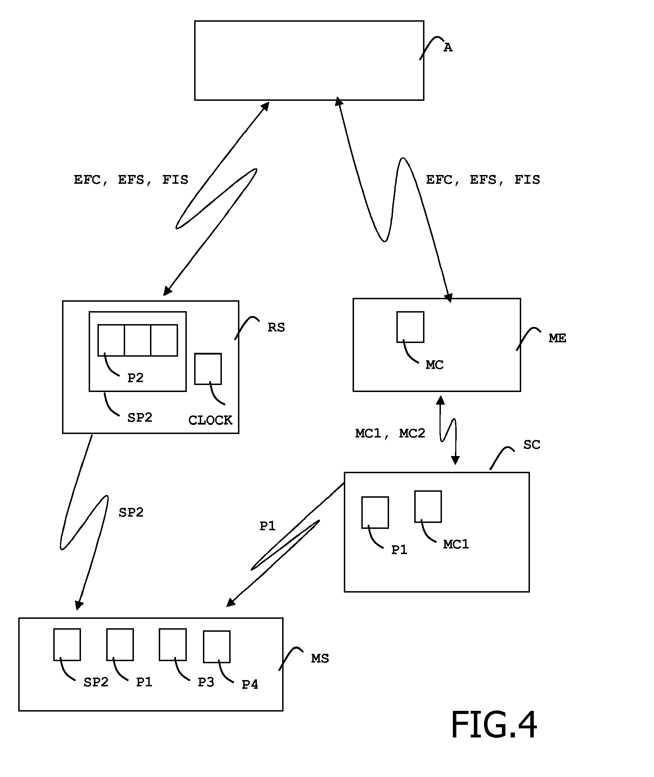

**Figure 4** shows the architecture of a broadcast framework of OMA-BCast type according to a preferred embodiment of the invention.

A broadcasting station A sends several streams related to broadcasted services. In this example, three streams EFC, EFS and FIS are sent for each service.

The EFS stream is a service stream that contains video services. Alternatively, EFS stream may also contain audio services or a mix audio/video services.

The EFC stream is a control stream associated to the EFS stream. The EFC stream contains control data related to each of video services belonging to the EFS stream. In particular, the EFC stream may contain control words allowing protection of the EFS stream content.

The FIS stream is a service description stream that contains a description of the services comprised in EFS streams. In particular, the FIS stream contains identifier of video services. Each service has its own unique identifier.

The three streams EFC, EFS and FIS may be multiplexed in a transport stream.

The invention relies on the fact that there is an EFC stream corresponding to each EFS stream.

The three types of streams are composed of a series of messages according to OMA-Bcast format. The EFC stream is composed of control messages MC1, MC2 having identical format and variable contents.

In this example, control messages are STKM messages according to the OMA-BCast standard In particular, detailed information related to STKM message may be found in "service and content protection" chapter of OMA BCast V1.0 standard. A control message contains a reference to service encryption key SEK, a timestamp TS and a traffic encryption key TEK. In a preferred embodiment, the traffic encryption key TEK is ciphered with the service encryption key SEK. The key K stored in the portable electronic device SC is the service encryption key SEK. The portable electronic device SC has means for deciphering a traffic encryption key TEK belonging to a STKM message sent by the mobile equipment ME. Contrary to its name, the timestamp TS contains a variable data which may not be related to date. The timestamp TS data is not sufficiently representative of the real date for reliably dating events.

Each message of the EFS stream comprises a reference to a particular message of the EFC stream.

In others words, the EFS stream contains ciphered services and the EFC stream contains keys for deciphering these services.

The three types of streams are received by both a mobile terminal equipment ME and a recording system RS.

The terminal ME sends to the portable electronic device the EFC streams corresponding to the EFS stream selected by the user.

In this example the mobile terminal equipment ME is a telecom handset that receives the EFC stream and extracts control message MC1 of STKM type. Then the control message MC1 is sent to the portable electronic device SC.

In this example the recording system RS is a station having means for receiving the broadcasted streams. The recording system RS comprises means equivalent to means of the portable electronic device SC. In addition, the recording system RS comprises an entrusted clock able to provide a reliable date.

Alternatively, the entrusted clock may be distinct from the recording system RS. In this case, the recording system RS has means for retrieving the date provided by the entrusted clock.

The recording system RS generates and stores a series SP2 of packet P2. The packet P2 generation process is described below.

A matching system MS can connect the recording system RS for getting the series SP2. The matching system MS can connect the portable electronic device SC for getting the indicator P1. This connection may be performed through the mobile terminal equipment ME via Over The Air messages or by any other relevant methods well known by a person skilled in communication system domain.

Alternatively, the recording system RS and the matching system MS may be implemented as a unique system.

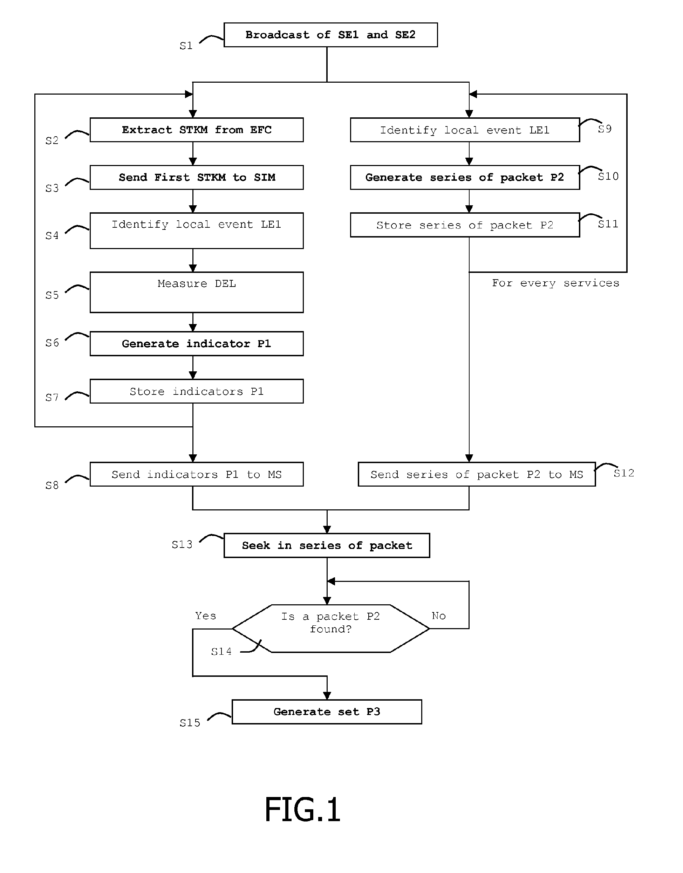

**Figure 1** shows an example of step sequence for the method of dating events according to the invention. At step S1, services SE1 and SE2 are broadcasted by the station A. Services SE1 and SE2 are sent through the EFS stream. These services are received by the mobile terminal equipment ME, the recording system RS and any other device able to exploit the broadcasted video and audio services, such as television sets.

At step S2, the mobile terminal equipment ME extracts the MC1 control message from the received EFC stream corresponding to the selected EFS. The user is assumed to have selected the broadcasted service SE1 on the mobile terminal equipment ME. In this case, the control message MC1 is of STKM type and corresponds to the selected service SE1.

At step S3, the mobile terminal equipment ME sends the extracted control message MC1 to the connected portable electronic device SC. In this example, the portable electronic device SC is a SIM smart card.

Then at step S6, an indicator P1 is generated in the SIM. This indicator P1 is generated as a function F1 of data extracted from the received STKM message. The indicator P1 is unique for a preset period PER and for the service SE1. For example, the indicator P1 may be made of the service encryption key SEK, the timestamp TS and the identifier of the traffic encryption key TEK, or the complete MC1 message.

Alternatively, the indicator P1 may be made of the traffic encryption key TEK or the service encryption key SEK or the service encryption key identifier SEKID or the Time Stamp TS or the KEMAC of the STKM of any combination of these elements.

In parallel, at step S10, the recording system RS generates a series SP2 of packets P2 for all control messages belonging to the EFC stream. For each packet P2, an indicator is generated in the same way as indicated above for the indicator P1. Each packet P2 is built with the generated indicator and an additional data RDA. This additional data RDA is a reference to an absolute date provided by an entrusted clock. Alternatively the additional data RDA may be the absolute date itself. The generated series SP2 is stored in the recording system RS at step S11. Alternatively, packets P2 of the generated series SP2 are stored when they are generated.

At step S8, the SIM sends the generated series SP1 of indicators P1 to the matching system MS. In the same way the recording system RS sends the generated series SP2 to the matching system MS at step S12. The matching system MS is able to associate the series SP1 to a specific duration DUR. This association will ease furthers steps of the dating method by limiting the range of search in series SP2. The specific duration DUR may correspond to the period which was passed since the preceding transfer of generated series from the SIM to the matching system MS. In other words, the SIM generates series SP1 of indicators P1 during a given duration. Generated series SP1 are then collected by the matching system MS.

The generated series SP1 may contain indicators related to a plurality of services, in particular when the user selected several services on the mobile equipment ME during the given duration.

At step S13, the matching system MS seeks in the series SP2 a packet P2 having an indicator equal to the indicator P1 coming from the SIM. If a packet P2 is found, a set P3 is generated at step S15. The set P3 comprises the reference to an absolute date RDA and the service identifier SID which are both comprised in the found packet P2. The seeking step is possible because each indicator P1 is unique for a preset period PER and for the related service. Each indicator P1 is unique because it is generated from the unique parts of a control message MC1 which is unique for the preset period PER.

Advantageously, each indicator P1 is generated so as to be unique for a preset period PER and for all broadcasted services. In this case, whatever the number of broadcasted services is, each indicator P1 is unique. In other words, an indicator P1 does not correspond to several services for the preset period PER. This embodiment allows dating events related to a service while several services are broadcasted together.

When the SIM generated a series SP1 of indicator P1, the seeking step should be applied to all indicators of the series SP1.

Advantageously, the seeking step is conducted in a limited range of the series SP2. The range limitation may be based on the period PER or the specific duration DUR associated to the series SP1.

In the case of broadcast TV services audience monitoring, the collection of P3 sets provides, for each user, a history over the period of recording, of user viewing activity. User events such as "TV start", "TV stop", "Channel change" can be indicated by the SIM in each P1 indicator, or derived in the matching system, and replicated in each P3 record. This allows the production of P4 records describing viewing session length for a particular service, by a particular user.

The aggregation of recorded P4 sets for many users provides audience metering information per service.

For measuring audience per program, it is possible to analyze the set P3 to determine the actual program viewed by the user. As a program is broadcasted at a particular point in time of a particular service, analysis consists in seeking, in the program play list history, the program that was played at the time given in P3. This can be replicated in P4 for aggregated viewing metrics over many users.

Advantageously, an identifier USID specific to either the user or the SIM may be associated to the generated indicator P1. In this case the series SP1 contains all generated indicators P1 and their associated identifier USID. At step S15, the set P3 may be generated with the relevant identifier USID. This additional identifier allows distinguishing each user of service.

Advantageously, a local event LE1 may be identified in the SIM by using data extracted from the received CM1 message. For example, the local event LE1 may be a Start event when an indicator P1 is generated for the first time after a long duration. This Start event may correspond to the beginning of service use. The local event LE1 may be a Switch event when the received STKM message contains a SEK different from the previous one. This Switch event may correspond to the change from a previous service to another one. The local event LE1 may be a Stop event when a time out occurs. This Stop event may correspond to the stop of service use. Such a Stop event occurs when the user turns the service off on the telecom handset.

In this case, the identified local event LE1 may be associated to the generated indicator P1. In this case the series SP1 contains all generated indicators P1 and their associated identified local event LE1. At step S15, the set P3 may be generated with the relevant local event LE1. This additional local event LE1 allows distinguishing the different user's actions on broadcasted services.

Alternatively, the local events LE1 may be computed outside the SIM card. In this case, local events are computed from the series SP1.

Advantageously, a time unit number DEL between receipt of a first and second control messages MC1 and MC2 may be measured in the SIM. In this case, at step S6 the measured time unit number DEL may be associated to the indicator P1 generated for the first control messages MC1. In this case the series SP1 contains all generated indicators P1 and their associated time unit number DEL. Then at step S15, the set P3 may be generated with the relevant time unit number DEL. This additional time unit number DEL allows refining the date associated to the related event. In particular, this feature allows refining the date for a Start event. In the case of streams of OMA-Bcast standard, the EFC stream contains several STKM messages having the same content. For example, these identical STKM messages may be sent in the EFC stream during a period of 10 seconds. The Telecom handset filters the messages of the EFC stream and sends only one of these STKM to the SIM. Thus when a service use is started on the telecom mobile in the middle of the 10 seconds period, the measured time unit number DEL allows correcting the absolute date linked to the Start event.

Alternatively, any combination of additional data among identifier USID, identified local event LE1, and time unit number DEL may be associated to the generated indicator P1. In this case the series SP1 contains all generated indicators P1 and their associated combination of additional data.

Alternatively, the indicator P1 generated in the portable electronic device SC may comprise the traffic encryption key TEK on a ciphered or clear form.

Alternatively, the indicator P1 may comprise the whole data of the STKM message.

The FIS stream may be related to or part of the Electronic Service Guide stream.

In communication security domain, Encryption Control Messages are known as ECM. Messages of ECM type are messages comprising data which are necessary for the receiving device to decipher targeted data. The above examples have been detailed for an ECM of STKM type. The invention may apply to control message of any ECM types. In particular the indicator P1 generated in the portable electronic device SC may comprise the whole data of the ECM message on a ciphered or clear form.

Apart from ECM, the control message could be of any type, provided it is uniquely associated to the EFS stream selected by the user, and the part of the EFC stream reaching the SIM contains control messages that are unique over the period PER.

Alternatively, means specific to the portable electronic device SC may be embedded in the mobile terminal equipment ME. These means may be implemented using software or hardware solutions. In this case, the steps S4, S5, S6, S7 and S8 are carried out by the mobile terminal equipment ME itself.

## Claims

1. A method of dating events (E1, E2) happening on a mobile terminal equipment (ME), data related to a broadcasted service (SE1) being broadcasted through first, second and third streams (EFC, EFS, FIS), the first stream (EFC) comprising control messages (MC1), the second stream (EFS) comprising actual service (SE1), the third stream (FIS) being built of messages comprising a service identifier (SID) corresponding to the broadcasted service (SE1), every streams being received by both said mobile terminal equipment (ME) and a recording system (RS), a portable electronic device (SC) being connected to the mobile terminal equipment (ME), said events (E1, E2) being generated during a preset period (PER),
said method comprises the following steps:
b) extracting (s2) a control message (MC1) from the first stream (EFC),
b) sending (S3) the extracted control message (MC1) from said mobile terminal equipment (ME) to said portable electronic device (SC),
**characterized in that** said method comprises the further steps:
c) in said portable electronic device (SC), generating (S6) an indicator (P1) as a function F1 of data comprised in the control message (MC1), said generated indicator (P1) being unique for the preset period (PER) and for said broadcasted service (SE1),
d) in said recording system (RS), generating (S10) a series (SP2) of packets (P2) comprising an indicator, a reference to an absolute date (RDA) and a service identifier (SID) extracted from a message belonging to the third stream (FIS), each indicator of said packet (P2) being generated as the function F1 of data extracted from a control message (MC1) belonging to broadcasted first stream (EFC),
e) seeking (S13) in the series (SP2) of packets (P2) a packet having an indicator equivalent to whole or part of the indicator (P1) generated in the portable electronic device (SC),
f) if a packet (P2) is found (S14), generating (S15) a set (P3) comprising the reference to an absolute date (RDA) and the service identifier (SID) comprised in the found packet (P2).

2. A method according to claim 1, wherein said method comprises the further steps:
g) in said portable electronic device (SC), identifying (S4) a local event (LE) by means of data extracted from the control message (MC1),
h) associating said local event (LE) to the generated indicator (P1).

3. A method according to claim 2, wherein said local event (LE) is identified by means of data stored in the portable electronic device (SC).

4. A method according to claim 1, wherein said method comprises the further steps:
i) identifying (S9) a local event (LE) by means of data extracted from two consecutive control messages (MC1, MC2) of the first stream (EFC),
j) associating said local event (LE) to the generated packet (P2).

5. A method according to one of claims 1 to 4, wherein several broadcasted services (SE1, SE2) are received by both the mobile terminal equipment (ME) and the recording system (RS) and wherein the indicator (P1) generated in said portable electronic device (SC) is unique for the predefined period (PER) whatever the broadcasted services (SE1, SE2).

6. A method according to one of claims 1 to 5, wherein the control message (MC1) is an encryption control message (ECM) in a conditional access system.

7. A method according to claim 6, wherein the control message (MC1) is a STKM.

8. A method according to claim 7, wherein the indicator (P1) generated in the portable electronic device (SC) comprises the traffic encryption key TEK and/or the service encryption key SEK and/or the service encryption key identifier SEKID and/or the Time Stamp TS and/or the KEMAC of the STKM.

9. A method according to claim 6, wherein said portable electronic device (SC) consecutively receives a second control message (MC2) with the first control message (MC1), wherein receipt of the first and second control messages (MC1, MC2) are separated by a time unit number (DEL), wherein said method comprises the steps:
k) in said portable electronic device (SC) measuring (S5) said time unit number (DEL),
l) associating said measured time unit number (DEL) to the generated indicator (P1) associated to the first control message (MC1).

10. A portable electronic device (SC) intended to be connected to a mobile terminal equipment (ME), said mobile terminal equipment (ME) being intended to receive streams of a broadcasted service (SE1), to extract a control message (MC1) from a first stream (EFC) and to send said control message (MC1) to the portable electronic device (SC), said portable electronic device (SC) comprising:
- a microprocessor (MP),
- a communication interface (IN),
- an operating system (OS),
- a working memory (MEM1) and a non volatile memory (MEM2),
- first means (M1) for extracting data contained in the control message (MC1),
**characterized in that** said portable electronic device (SC) comprises:
- second means (M2) for generating an indicator (P1) as a function F1 of said data extracted from the control message (MC1) where said generated indicator (P1) is unique for a preset period (PER) and for a broadcasted service (SE1).

11. A portable electronic device (SC) according to claim 10, wherein several broadcasted services (SE1, SE2) are received by the mobile terminal equipment (ME) and wherein the indicator (P1) generated in said portable electronic device (SC) is unique for the predefined period (PER) whatever the broadcasted services (SE1, SE2).

12. A portable electronic device (SC) according to one of claims 10 to 11, wherein said portable electronic device (SC) comprises third means (M3) for identifying a local event (LE) by means of data extracted from the control message (MC1) and wherein said second means (M2) are able to generate the indicator (P1) as a function of said local event (LE).

13. A portable electronic device (SC) according to one of claims 10 to 12, wherein said portable electronic device (SC) consecutively receives a second control message (MC2) with the first control message (MC1), wherein receipt of the first and second control messages (MC1, MC2) are separated by a time units number (DEL), and wherein said portable electronic device (SC) comprises fourth means (M4) for measuring said time units number (DEL) and, wherein said second means (M2) are able to generate the indicator (P1) associated to the first control message (MC1) as a function of the measured time units number (DEL).

14. A portable electronic device (SC) according to one of claims 10 to 13, **characterized in that** said portable electronic device (SC) is a smart card.

15. A matching system (MS) intended to store an indicator (P1) generated in a portable electronic device (SC) and to store a series (SP2) of packets (P2) generated by a recording system (RS), each of said packets (P2) comprising a reference to an absolute date (RDA) and a service identifier (SID), said matching system (MS) comprising:
- a microprocessor (MP2),
- a communication interface (IN2),
- an operating system (OS2),
- a working memory (MEM3) and a non volatile memory (MEM4),
- first means (MS1) for seeking in said series (SP2) of packets (P2) a packet having an indicator equivalent to whole or part of the indicator (P1) generated in the portable electronic device (SC),
**characterized in that** said matching system (MS) comprises:
- second means (MS2) for generating a set (P3) comprising the reference to an absolute date (RDA) and the service identifier (SID) comprised in a packet belonging to said series (SP2) of packets (P2).
